# EUROPÄISCHE PATENTANMELDUNG

(11) **EP 2 952 946 A1**
(43) Veröffentlichungstag der Anmeldung: **09.12.2015**
(21) Anmeldenummer: 14170725.7
(22) Anmeldetag: 02.06.2014
(51) Int. Cl.: G02B 19/00, F21V 5/00, F21V 7/00, F21V 7/04, G02B 3/08

(54) **Optikkörper mit einer Linsenoptik und den Optikkörper aufweisendes Lichtmodul**

(71) Anmelder: Hella KGaA Hueck & Co., 59552 Lippstadt (DE)
(72) Erfinder: Möller, Dennis, 59557 Lippstadt (DE)

(57) **Zusammenfassung**

Die Erfindung betrifft einen Optikkörper mit wenigstens einer Linsenoptik umfassend eine Mehrzahl von konzentrisch zu einem optischen Zentrum der Linsenoptik vorgesehenen ringförmigen Prismen, wobei an den Prismen jeweils eine dem optischen Zentrum der Linsenoptik zugewandte ringförmige Innenfläche als Lichteintrittsfläche und eine rückwärtige, von dem optischen Zentrum der Linsenoptik abgewandte Außenfläche vorgesehen ist, wobei die Außenfläche nach Art einer Totalreflexionsfläche ausgebildet ist zum Umlenken des über die Lichteintrittsfläche eingekoppelten Lichts in Richtung einer Lichtaustrittsfläche der Linsenoptik, dadurch gekennzeichnet, dass die Außenflächen der Prismen facettiert ausgebildet sind derart, dass eine Mehrzahl von Facetten in Umfangsrichtung verteilt vorgesehen ist, wobei die Facetten unter einem spitzen Anstellwinkel zu der Umfangsrichtung der Prismen vorgesehen sind.

## Beschreibung

Die Erfindung betrifft einen Optikkörper mit wenigstens einer Linsenoptik umfassend eine Mehrzahl von konzentrisch zu einem optischen Zentrum der Linsenoptik vorgesehenen ringförmigen Prismen, wobei an den Prismen jeweils eine dem optischen Zentrum der Linsenoptik zugewandte ringförmige Innenfläche als Lichteintrittsfläche und eine rückwärtige, von dem optischen Zentrum der Linsenoptik abgewandte Außenfläche vorgesehen ist, wobei die Außenfläche nach Art einer Totalreflexionsfläche ausgebildet ist zum Umlenken des über die Lichteintrittsfläche eingekoppelten Lichts in Richtung einer Lichtaustrittsfläche der Linsenoptik. Ferner betrifft die Erfindung ein Lichtmodul mit dem erfindungsgemäßen Optikkörper.

Ein gattungsgemäßer Optikkörper ist aus der DE 10 2010 028 755 A1 bekannt. Der Optikkörper sieht eine Linsenoptik mit einer Mehrzahl von konzentrisch zu einem optischen Zentrum der Linsenoptik angeordneten ringförmiger Prismen vor. Die ringförmigen Prismen sind im Querschnitt dreieckförmig beziehungsweise sägezahnförmig geformt, wobei einer im optischen Zentrum der Linsenoptik vorgesehenen Lichtquelle ausgestrahltes Licht auf eine dem optischen Zentrum zugewandte ringförmige Innenfläche der Prismen auftrifft und in den Optikkörper eingekoppelt wird. Das Licht trifft im Weiteren auf eine nach Art einer Totalreflexionsfläche wirkenden ringförmigen Außenfläche der Linsenoptik, welche von einer rückwärtigen, das heißt von dem optischen Zentrum der Linsenoptik abgewandten Begrenzungsfläche definiert wird. An der Totalreflexionsfläche wird das Licht in Richtung einer Lichtaustrittsfläche umgelenkt und über diese aus dem Optikkörper ausgekoppelt. Grundsätzlich sind derartige Optiken geeignet, um das Licht einer insbesondere punktförmigen Lichtquelle, beispielsweise einer Leuchtdiode, zu verteilen und eine insbesondere kreisförmige Fläche weitgehend homogen auszuleuchten. Dabei kann von einem außenstehenden Beobachter die Leuchtdiode gleichwohl als punktförmige Lichtquelle wahrgenommen werden. Diese Eigenschaft kann abhängig von der speziellen Applikation als störend wahrgenommen werden.

Aufgabe der Erfindung ist es demzufolge, einen Optikkörper insbesondere für eine punktförmige Lichtquelle anzugeben, welcher geeignet ist, die Wahrnehmbarkeit der Lichtquelle als hellen Lichtpunkt zu reduzieren und dadurch insbesondere eine Blendungsreduzierung herbeizuführen.

Zur Lösung der Aufgabe ist die Erfindung in Verbindung mit dem Oberbegriff des Patentanspruchs 1 dadurch gekennzeichnet, dass die Außenflächen der Prismen facettiert ausgebildet sind derart, dass eine Mehrzahl von Facetten in Umfangsrichtung verteilt vorgesehen ist, wobei die Facetten unter einem spitzen Anstellwinkel zu der Umfangsrichtung der Prismen vorgesehen sind.

Der besondere Vorteil der Erfindung besteht darin, dass infolge der facettierten Ausbildung der als Totalreflexionsflächen dienenden Außenflächen der Prismen das von einer punktförmigen Lichtquelle ausgestrahlte Licht dreidimensional gesteuert beziehungsweise verteilt wird. Mit dem erfindungsgemäßen Optikkörper gelingt es demzufolge zum einen, eine vorgegebene Beleuchtungsfläche homogen auszuleuchten. Zum Anderen wird verhindert, dass ein von außen auf den Optikkörper schauender Betrachter die sehr helle Leuchtdiode im optischen Zentrum der Linsenoptik als punktförmige Lichtquelle wahrnimmt. Insofern bestimmen vor allem der Anstellwinkel und die Größe der einzelnen Facetten die Lichtverteilung und das Erscheinungsbild der Optik. Die Facetten zerteilen dabei die von der Lichtdiode bereitgestellte Lichtverteilung in eine Vielzahl von Teillichtverteilungen. Insbesondere kann die Facettierung so ausgebildet sein, dass sich eine Überlagerung der an den verschiedenen Facetten totalreflektierten Lichtbündel beziehungsweise der Teillichtverteilungen im Bereich der ausgeleuchteten Fläche ergibt.

Die ringförmigen Prismen mit den hieran vorgesehenen Facetten können zu einer Reduzierung der Wandstärke der Linsenoptik beziehungsweise zu einer Vergrößerung der Ausdehnung der Linsenoptik beitragen. Da insbesondere große Wandstärken fer-tigungstechnische Probleme bereiten und beim Herstellen mittels Spritzgusstechniken erhebliche Anstrengungen zur Bewältigung der Probleme unternommen werden müssen, vereinfacht die Facettierung der Außenflächen der ringförmigen Prismen zugleich die Fertigung. Wirtschaftlich vorteilhaft ist der Optikkörper zudem, da die Wandstärken reduziert und der Materialaufwand begrenzt werden können. Insbesondere kann die Linsenoptik mit den ringförmigen Prismen nach Art einer Fresnellinse ausgebildet sein. Während Linsen dieses Typs ohne facettierte Außenfläche typischerweise in kleinen Abmessungen mit maximal 20 mm bis 30 mm Durchmesser realisiert werden, kann die erfindungsgemäße Linsenoptik Abmessungen von 30 mm bis 70 mm aufweisen. Insofern können vorteilhaft große Flächen homogen ausgeleuchtet werden. Die maximal auftretende Leuchtdichte und die damit verbundene Blendung können wirksam reduziert werden.

Nach einer bevorzugten Ausführungsform der Erfindung sind die Außenflächen der ringförmigen Prismen asymmetrisch facettiert. Dabei ist zwischen zwei benachbarten Facetten einer Außenfläche ein gestufter Übergangsbereich ausgebildet. Eine Breite des Übergangsbereichs ist - in die Umfangsrichtung bestimmt - kleiner als eine Breite der Facetten. Vorteilhaft begünstigt die asymmetrische Facettierung der Außenfläche die Bereitstellung einer homogenen Lichtverteilung. Die Zerteilung des LED-Abbilds an den Teilflächen (Facetten) der facettierten Außenfläche erfolgt dabei dreidimensional mit der Folge, dass die Wahrnehmbarkeit der Leuchtdiode als Lichtpunkt und die Blendung weiter reduziert werden.

Nach einer Weiterbildung der Erfindung sind die Facetten an benachbarten ringförmigen Prismen gegenläufig vorgesehen. Dabei ist der Anstellwinkel der Facetten an den benachbarten Prismen gespiegelt in Bezug zu einer Radialrichtung der Linsenoptik. Vorteilhaft verbessert sich durch das Vorsehen der gegenläufigen Anstellung der Facetten die Homogenität der Lichtverteilung und die Blendungswirkung wird weiter reduziert. Darüber hinaus erhält der Optikkörper durch die gegenläufige Facettierung ein besonderes ansprechendes, wiedererkennbares Design. Im beleuchteten Zustand ergibt sich abhängig von einer Blickrichtung eines außenstehenden Beobachters auf den Optikkörper ein unterschiedliches Leuchtbild, da die Facetten der ringförmigen Prismen das Licht abwechselnd nach links und rechts werfen.

Nach einer Weiterbildung der Erfindung überdecken die einzelnen Facetten eines ringförmigen Prismas beziehungsweise die Facetten benachbarter ringförmiger Prismen einen gleichen Winkelbereich. Der gleiche Winkelbereich der Facetten beträgt inklusive eines zugeordneten Übergangsbereichs bevorzugt 12° oder 15° oder 18° oder 20° oder 24° oder 30° oder 36° oder 40° oder 45° oder 60°. Während das Vorsehen der Facetten an der Außenfläche der ringförmigen Prismen die homogene Lichtverteilung begünstigt und dem Optikkörper ein ansprechendes, wiedererkennbares Erscheinungsbild verleiht, begünstigt das Vorsehen der unter gleichen Winkelbereichen vorgesehenen Facetten die optische Auslegung. Zudem ergibt sich für einen außenstehenden Betrachter abhängig von der Betrachtungsrichtung zwar ein unterschiedliches Leuchtbild. Jedoch ist das Leuchtbild wiederkehrend beziehungsweise regelmäßig ausgebildet. Ein Winkelbereich der Facetten inklusive eines zugeordneten Übergangsbereichs ist vorteilhafterweise ein ganzzahliger Teil des Vollkreises. Insofern können die Facetten am Umfang der ringförmigen Prismen regelmäßig vorgesehen werden. Die Anzahl der Facetten variiert hierbei abhängig vom Winkelbereich. Während beispielsweise vierundzwanzig Facetten bei einem Winkelbereich von 15° vorgesehen sind, können zwölf Facetten bei einem Winkelbereich von 30° vorgesehen sein.

Nach einer Weiterbildung der Erfindung sind die Facetten benachbarter ringförmiger Prismen einander ohne Winkelversatz zugeordnet. Bezogen auf die Radialrichtung liegen die Facetten der ringförmigen Prismen demzufolge unmittelbar hintereinander. Insbesondere weisen die Facetten der verschiedenen ringförmigen Prismen in die Umfangsrichtung eine gleiche Breite auf.

Zur Lösung der Aufgabe weist ein Lichtmodul einen erfindungsgemäßen Optikkörper mit wenigstens einer Linsenoptik auf. Der wenigstens einen Linsenoptik ist in dem optischen Zentrum derselben eine Leuchtdiode als Lichtquelle zugeordnet. Eine Lichtaustrittsfläche der mindestens einen Linsenoptik definiert hierbei eine Außenseite einer Abschlussscheibe des Optikkörpers, wobei die Abschlussscheibe auf einer den Leuchtdioden zugewandten Innenseite die wenigstens eine Linsenoptik aufweist und wobei die Abschlussscheibe auf der der Leuchtdiode abgewandten Außenseite optikfrei beziehungsweise glatt ausgebildet ist. Insbesondere ist die Außenseite der Abschlussscheibe plan oder nur minimal gewölbt realisiert.

Der besondere Vorteil der Erfindung besteht darin, dass mittels des erfindungsgemäßen Lichtmoduls die geforderte homogene Lichtverteilung bereitgestellt und die Blendung signifikant reduziert werden kann. Insbesondere wird eine rotationssymmetrische Lichtverteilung realisiert. Da die Abschlussscheibe auf der Außenseite optikfrei, plan beziehungsweise nur minimal gewölbt ausgebildet ist, kann die Reinigung in einfacher Weise realisiert werden, und einer Anhaftung von Schmutz ist vorgebeugt. Zudem ergibt sich ein guter lichttechnischer Wirkungsgrad, da infolge der Totalreflexion und der einstufigen Lichtumlenkung in dem Optikkörper die optischen Verluste reduziert werden können.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details des Optikkörpers gelten selbstverständlich auch im Zusammenhang mit dem erfindungsgemäßen Lichtmodul und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

Anhand der beigefügten Zeichnungen wird die Erfindung nachfolgend näher erläutert. Dabei zeigen:
- Fig. 1: eine perspektivische Ansicht eines erfindungsgemäßen Lichtmoduls mit einem Optikkörper,
- Fig. 2: einen Querschnitt durch das erfindungsgemäße Lichtmodul nach Fig. 1,
- Fig. 3: eine perspektivische Ansicht einer Innenseite des Optikkörpers mit einer Mehrzahl von in einer Längsrichtung des Optikkörpers verteilt angeordneten Linsenoptiken,
- Fig. 4: eine Aufsicht auf eine fertiggestellte Linsenoptik mit einer Mehrzahl konzentrisch in Bezug auf ein optisches Zentrum der Linsenoptik angeordneter ringförmiger Prismen,
- Fig. 5: eine perspektivische Ansicht der fertiggestellten Linsenoptik nach Fig. 4,
- Fig. 6: einen Schnitt durch die fertiggestellte Linsenoptik nach Fig. 4
- Fig. 7: eine perspektivische Ansicht der fertiggestellten Linsenoptik nach den Fig. 4 bis 6 mit einer Darstellung des Strahlverlaufs,
- Fig. 8: einen Schnitt durch die fertiggestellte Linsenoptik nach den Fig. 4 bis 6 mit der Darstellung des Strahlverlaufs,
- Fig. 9: eine Seitenansicht der fertiggestellten Linsenoptik nach den Fig. 4 bis 6 mit der Darstellung des Strahlverlaufs,
- Fig. 10: eine lineare Darstellung einer Lichtverteilungskurve der fertiggestellten Linsenoptik nach Fig. 4 bis 6 und
- Fig. 11: die Lichtverteilungskurve nach Fig. 10 in einer Polarkoordinatendarstellung.

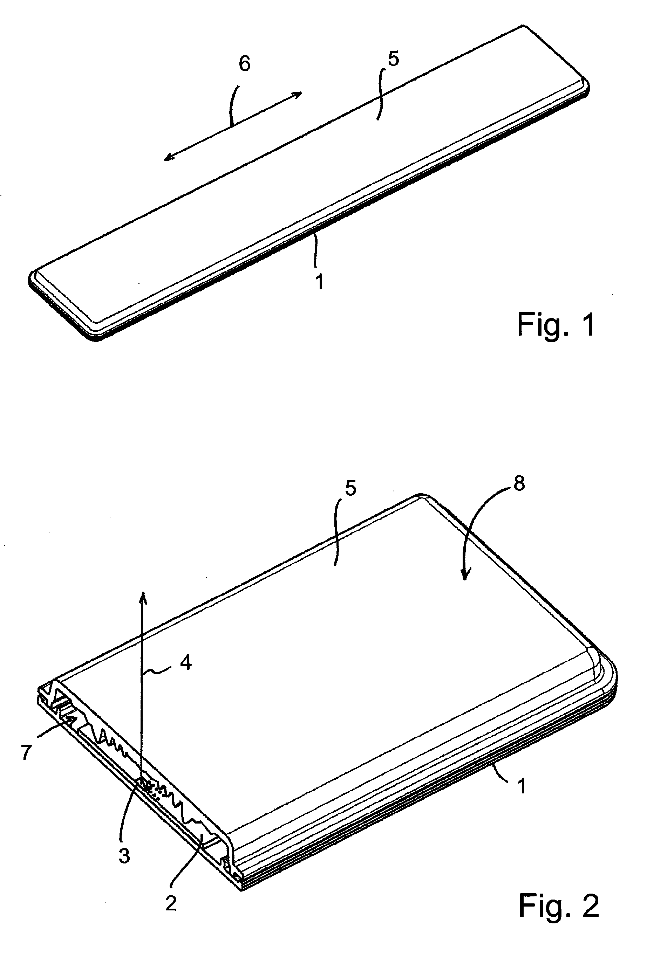

Ein erfindungsgemäßes Lichtmodul nach den Fig. 1 und 2 umfasst als wesentliche Komponenten einen Gehäusekörper 1, einen an den Gehäusekörper 1 angelegten Schaltungsträger 2, eine Mehrzahl von an dem Schaltungsträger 2 festgelegten Leuchtdioden 3 als punktförmige Lichtquellen sowie einen den Leuchtdioden 3 in einer Hauptabstrahlrichtung 4 vorgelagerten Optikkörper 5. Das Lichtmodul ist in einer Längsrichtung 6 langgestreckt ausgebildet. Insbesondere kann vorgesehen sein, dass der Optikkörper 5 und der Gehäusekörper 1 in Umfangsrichtung stoffschlüssig verbunden, insbesondere verschweißt sind und dass insofern ein zwischen dem Gehäusekörper 1 und dem Optikkörper 5 gebildeter Zwischenraum 7, welcher den Schaltungsträger 2 und die Leuchtdioden 3 aufnimmt, gekapselt beziehungsweise gedichtet ausgebildet ist.

Das erfindungsgemäße Lichtmodul dient insbesondere als Indachbeleuchtung beziehungsweise Unterdachbeleuchtung. Es kommt beispielsweise bei der Beleuchtung von Tankstellen oder anderen überdachten Bereichen zur Anwendung. Der Optikkörper 5 dient zum Formen des von der Leuchtdioden 3 abgestrahlten Lichts und zum Bereitstellen einer vorgesehenen Lichtverteilung, mit der eine vorgegebene Fläche im Wesentlichen homogen angeleuchtet wird. Der Optikkörper 5 weist eine ebene, optikfreie und plane beziehungsweise nur minimal gekrümmte Außenseite 8 auf. Die optikfreie, ebene Außenseite 8 ist vorteilhaft insbesondere im Hinblick auf die Verschmutzung des Lichtmoduls beziehungsweise die Reinigung desselben.

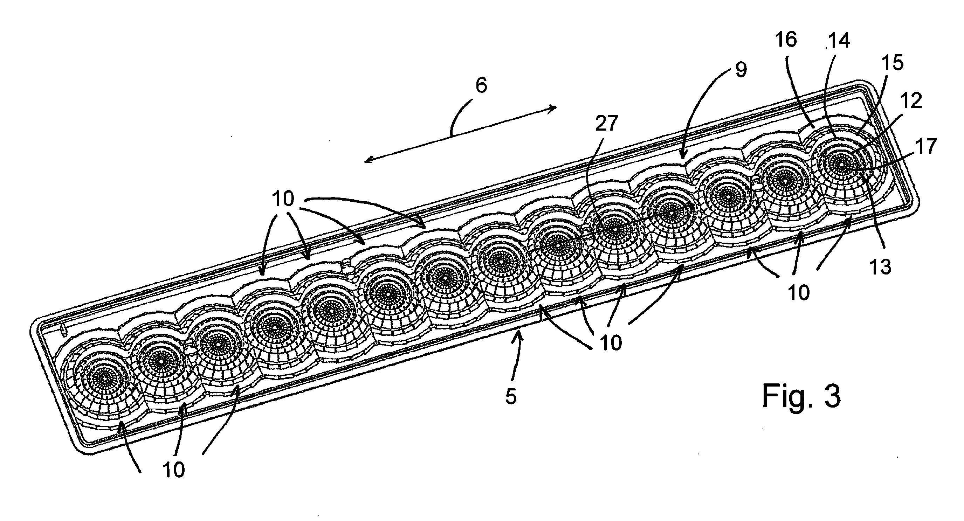

Eine Innenseite 9 des Optikkörpers 5 sieht - wie in Fig. 3 dargestellt - eine Mehrzahl von in die Längsrichtung 6 regelmäßig verteilt angeordneten Linsenoptiken 10 vor. Insgesamt sind vorliegend 14 Linsenoptiken 10 im Bereich der Innenseite 9 des Optikkörpers 5 realisiert. Jede einzelne Linsenoptik 10 weist dabei eine Mehrzahl von um ein optisches Zentrum 11 koaxial beziehungsweise konzentrisch vorgesehenen Prismen 12,13,14,15 auf. In eine Radialrichtung 18 außen schließen sich weitere Optikstrukturen 16 an die ringförmigen Prismen 12,13,14,15 an. Die weiteren Optikstrukturen 16 sind nach Art von Lichtfallen ausgebildet. Sie dienen zum Umlenken von Streulicht in die Hauptabstrahlrichtung 4 des Lichtmoduls.

Die Lichtfallen 16, welche ebenfalls jedenfalls abschnittsweise konzentrisch zum optischen Zentrum 11 der Linsenoptik 10 vorgesehen sind, sind aufgrund des Abstands benachbarter Linsenoptiken 10 in die Längsrichtung 6 ebenso wie ein äußeres ringförmiges Prisma 15 unterbrochen realisiert. Innerhalb der Prismen 12, 13, 14, 15 ist eine facettierte Optikfläche 17 realisiert. Die facettierte Optikfläche 17 dient dazu, von den Leuchtdioden 3 unter einem spitzen Winkel zur Hauptabstrahlrichtung 4 abgesandtes Licht jedenfalls zum Teil vom Lot weg nach außen zu brechen und eine breite Lichtverteilung bereitzustellen.

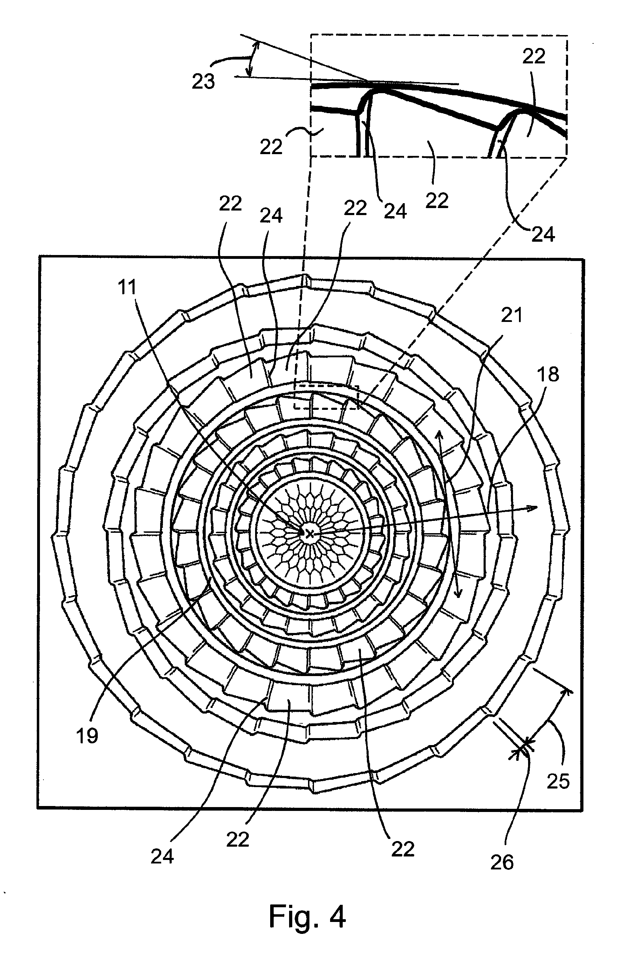

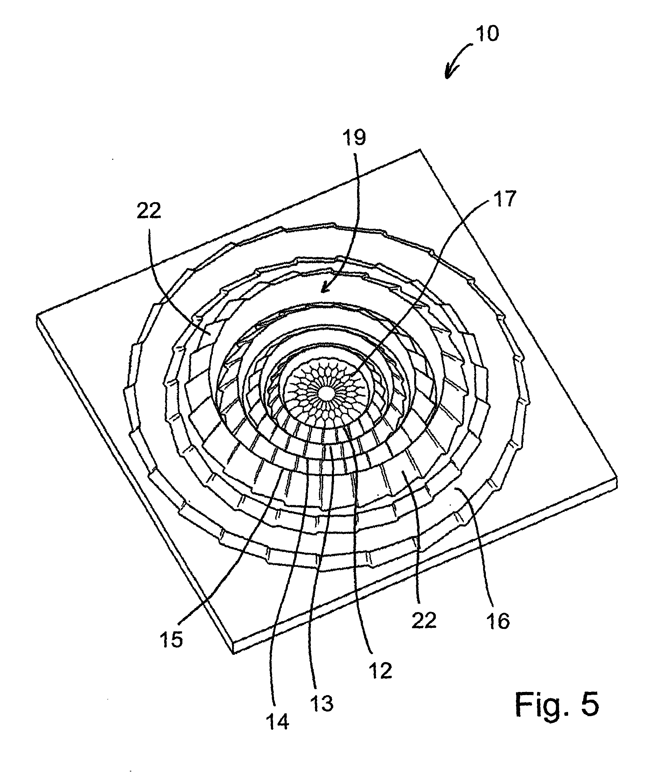

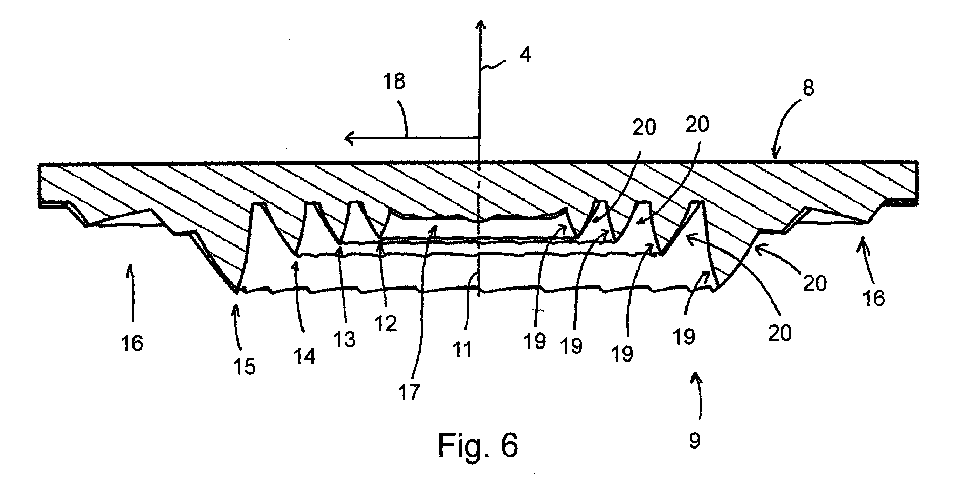

Die Figuren 4 bis 6 zeigen eine einzelne, fertiggestellte Linsenoptik 10, bei der koaxial zum optischen Zentrum 11 die Prismen 12, 13, 14, 15 als geschlossene Ringe ausgebildet sind. Ebenso geschlossen sind die in die Radialrichtung 18 die ringförmigen Prismen 12,13,14,15 außen umgebenden Lichtfallen 16. Im Inneren der ringförmigen Prismen 12, 13, 14, 15 ist ferner die facettierte Optikfläche 17 vorgesehen.

Jedes einzelne ringförmige Prisma 12, 13, 14, 15 sieht eine dem optischen Zentrum 11 der Linsenoptik 10 zugewandte ringförmige Innenfläche 19 sowie eine rückwärtige, von dem optischen Zentrum 11 der Linsenoptik 10 abgewandte Außenfläche 20 vor. Die Innenfläche 19 ist im Wesentlichen eben ausgebildet. Sie dient als Lichteintrittsfläche zum Einkoppeln von Licht der Leuchtdioden 3 in den Optikkörper 5. Die dem optischen Zentrum 11 abgewandte Außenfläche 20 dient als Totalreflexionsfläche für das in den Optikkörper 5 eingekoppelte Licht. An der Außenfläche 20 wird Licht der Leuchtdiode 3 in Richtung der als Lichtaustrittsfläche dienenden Außenseite 8 des Optikkörpers 5 umgelenkt.

Die Außenfläche 20 der Prismen 12, 13, 14, 15 ist facettiert ausgebildet. Dabei ist in einer Umfangsrichtung 21 verteilt eine Mehrzahl von Facetten 22 angeordnet. Bezogen auf die Umfangsrichtung 21 beziehungsweise eine an die ringförmigen Prismen 12, 13, 14, 15 angelegte Tangente sind die Facetten 22 unter einem spitzen Anstellwinkel 23 vorgesehen.

Insgesamt sind in die Umfangsrichtung 21 an jedem einzelnen ringförmigen Prisma 12, 13, 14, 15 vierundzwanzig gleich große Facetten 22 unter einem gleichen Anstellwinkel 23 vorgesehen. Zwischen benachbarten Facetten 22 eines ringförmigen Prismas 12, 13, 14, 15 ist jeweils ein Übergangsbereich 24 gestuft realisiert. Bezogen auf die Umfangsrichtung 21 ist eine Breite 25 der Facetten 22 größer als eine Breite 26 der zwischen den Facetten 22 vorgesehenen Übergangsbereiche 24. Vorliegend sind die Facetten 22 etwa acht- bis zehnmal breiter als die Übergangsbereiche 24. Es ergibt sich insofern eine asymmetrische Facettierung der Außenflächen 20. Die Übergangsbereiche 24 sind für die zur Verfügung gestellte Lichtverteilung von geringer Bedeutung.

Die Facetten 22 an benachbarten ringförmigen Prismen 12, 13, 14, 15 sind nach dem vorliegenden Ausführungsbeispiel der Erfindung derart realisiert, dass der Anstellwinkel 23 gespiegelt in Bezug zu der Radialrichtung 18 der Linsenoptik 10 orientiert ist. Es ist insofern der Anstellwinkel 23 betragsmäßig gleich, jedoch vorzeichenverkehrt zu der Radialrichtung 18 ausgebildet. Die iterierend rotierten Facetten 22 der ringförmigen Prismen 12, 13, 14, 15 verleihen der Linsenoptik 10 und dem Optikkörper 5 insofern ein individuelles Erscheinungsbild. Sie begünstigen ferner eine homogene Lichtverteilung und tragen zu einer Reduzierung der Blendung bei.

In die Radialrichtung 18 betrachtet sind die Facetten 22 beziehungsweise die Übergangsbereiche 24 der benachbarten ringförmigen Prismen 12, 13, 14, 15 einander ohne Winkelversatz zugeordnet, das heißt, die Facetten 22 des äußeren ringförmigen Prismas 15 liegen direkt fluchtend hinter den Facetten 22 eines inneren Prismas 12. Weiter liegen die Facetten 22 der beiden mittleren ringförmigen Prismen 13, 14 exakt hinter den Facetten 22 des inneren Prismas 12 und exakt vor den Facetten 22 des äußeren Prismas 15. Die im Winkelgrad [°] bestimmten Breite 25 der Facetten 22 ist dabei konstant. Gleiches gilt für die zwischen zwei in die Umfangsrichtung 21 benachbarten Facetten 22 gebildeten Übergangsbereich 24. Die Übergangsbereiche 24 der verschiedenen ringförmigen Prismen 12, 13, 14, 15 finden sich in einem gleichen Winkelbereich 25, 26 der Linsenoptik 10.

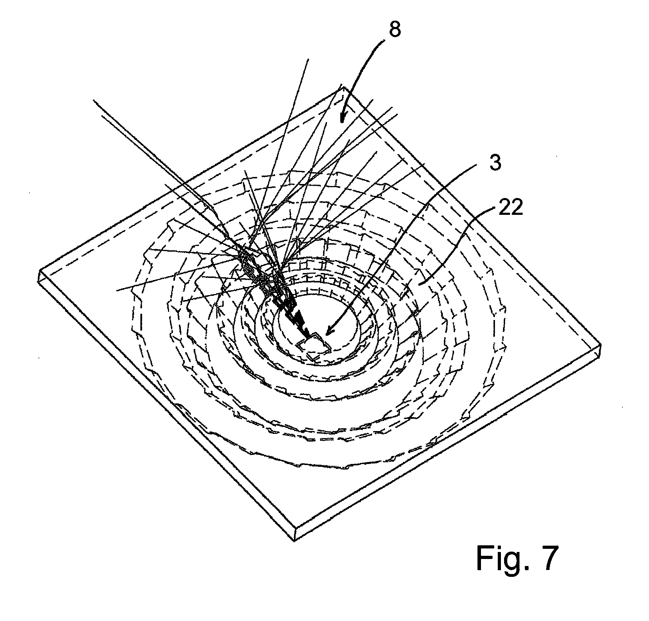

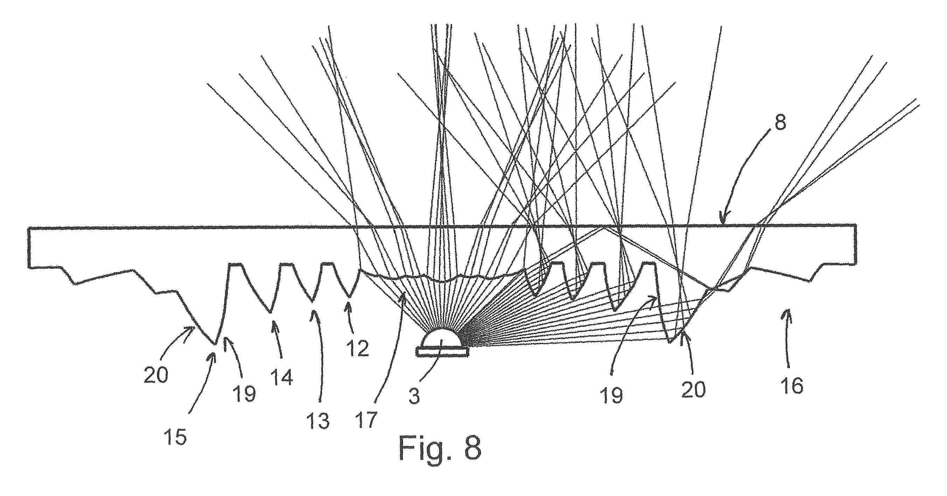

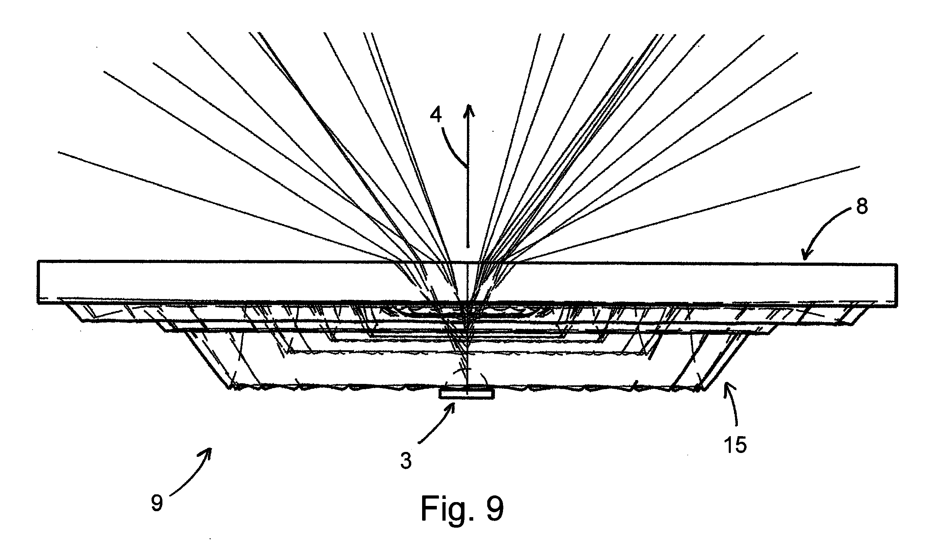

Die Fig. 7 bis 9 zeigen den Strahlverlauf in der fertiggestellten Linsenoptik 10. Jeweils zeigt sich, dass das Licht zur Erzeugung einer breiten Lichtverteilung vorliegend vom optischen Zentrum 11 weg nach außen gebrochen wird. Der kleine, helle, durch die Leuchtdiode 3 definierte Leuchtpunkt wird so für den Betrachter, welcher von außen auf das Lichtmodul schaut, weniger hell wahrgenommen. Insbesondere sorgen hierbei die Facetten 22 für eine Vielzahl von einzelnen Licht brechenden Flächen. Licht, welches unter einem vergleichsweise großen Winkel von zirka 30° bis 90° zur Hauptabstrahlrichtung 4 auf die Innenseite 19 der ringförmigen Prismen 12, 13, 14, 15 trifft, wird nach der Einkopplung in den Optikkörper 5 an den als Totalreflexionsflächen wirkenden Außenflächen 20 der Prismen 12, 13, 14, 15 totalreflektiert und in Richtung der Außenseite 8 des Optikkörpers 5 umgelenkt.

Die einzelnen Facetten 22 zerlegen beziehungsweise teilen das von der Leuchtdiode 3 abgestrahlte Licht. Es ergeben sich einzelne leuchtende Flächen. Es wird dabei insbesondere in der Wahrnehmung eines außenstehenden Betrachters die maximal auftretende Leuchtdichte reduziert. Aufgrund der Reduzierung der Leuchtdichte nimmt insbesondere auch die Blendung ab. Die den einzelnen Facetten 22 zugeordneten Teillichtverteilungen überlagern einander in der Gesamtlichtverteilung. Dies begünstigt die Homogenität.

Sofern ein Neigungswinkel der Totalreflexionsflächen 20 zur Hauptabstandsrichtung 4im Einzelfall nicht ausreichend groß ist, gelangt das dort auftreffende Licht auf die die ringförmigen Prismen 12, 13, 14, 15 umgebenden Lichtfallen 16. Im Bereich der Lichtfallen 16, welche selbst ebenfalls prismenartige Struktur aufweisen, wird das Licht in die Hauptabstrahlrichtung 4 umgelenkt. Es trägt so zur Lichtverteilung bei.

Aufgrund der rotationssymmetrischen Anordnung der Prismen 12, 13, 14, 15 , der Lichtfalle 16 und der facettierten Optikfläche 17 sowie der Anordnung der Leuchtdiode 2 im optischen Zentrum 11 ergibt sich eine in Bezug zum optischen Zentrum 11 im Wesentlichen rotationssymmetrische Lichtverteilung.

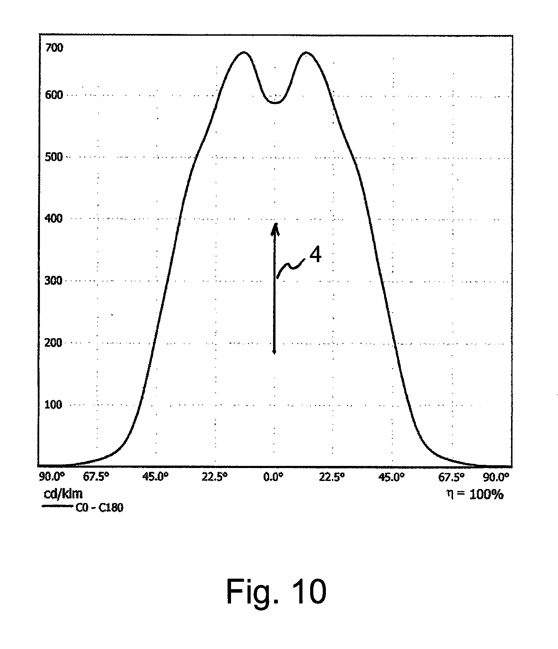

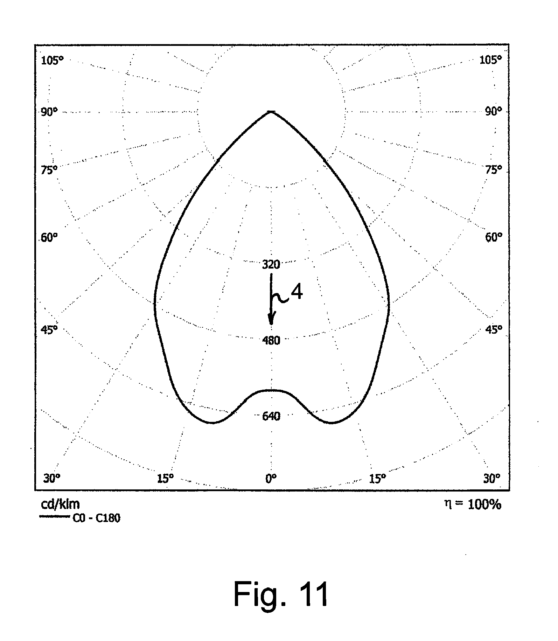

Die Fig. 10 und 11 zeigen die resultierende Lichtverteilung für die freigestellte Linsenoptik 10 nach den Fig. 4 bis 9. Es zeigt sich die gute Homogenität der Lichtverteilung. Insbesondere ist ein Halbwertswinkel für die Lichtverteilung von etwa ± 30° bezogen auf die Hauptabstrahlrichtung 4 realisiert.

Da die geforderte Lichtverteilung im Wesentlichen durch eine Einstufenoptik bereitgestellt wird, ergibt sich ein sehr guter optischer Wirkungsgrad für das Lichtmodul. Insbesondere haben Untersuchungen gezeigt, dass ein optischer Wirkungsgrad von etwa 90° erreicht wird. Hierzu trägt bei, dass quasi das gesamte, von der Leuchtdiode 3 unter einem Winkel von ±90° zur Hauptabstrahlrichtung 4 emittierte Licht von dem Optikkörper 5 zur Formung der geforderten Lichtverteilung verwendet wird.

Das Ausführungsbeispiel der Erfindung dient exemplarisch der Darstellung von verschiedenen erfindungswesentlichen Merkmalen. Grundsätzlich gilt, dass die Facettierung der Außenflächen 20 der Prismen 12, 13, 14, 15 nach einem anderen Ausführungsbeispiel der Erfindung symmetrisch ausgebildet sein können. Insbesondere kann auf die gegenläufige Anordnung der Facetten 22 bei benachbarten Prismenringen 12, 13, 14, 15 verzichtet werden. Ebenso kann zwischen den Facetten 22 und den Übergangsbereichen 24 benachbarter Prismenringe 12, 13, 14, 15 ein Winkelversatz realisiert sein.

Exemplarisch ist ferner die insbesondere in Fig. 3 dargestellte Orientierung benachbarter Linsenoptiken 10 zueinander. Hierbei ist durch die Längsrichtung 6 des Optikkörpers 5 eine Nullrichtung 27 für die Lage der Linsenoptiken 10 dahingehend vorgegeben, dass in die Längsrichtung 6 an benachbarten Linsenoptiken 10 jeweils der Übergangsbereich 24 vorgesehen ist. Ein Winkelversatz zwischen benachbarten Linsenoptiken 10 ist insofern nicht vorgesehen. Der Optikkörper 5 kann eine andere Anzahl an Linsenoptiken 5 vorsehen, und der Abstand benachbarter Linsenoptiken 5 kann anders gewählt sein als dargestellt. Insbesondere kann der Abstand so gewählt sein, dass die außen ringförmigen Prismen 15 in die Umfangsrichtung 21 geschlossen gebildet sind. Die Anzahl konzentrischer Prismenringe 12, 13, 14, 15 kann ebenfalls abweichend gewählt werden. Die Linsenoptik 10 kann insbesondere im Hinblick auf die Lichtfalle 16 und die innere facettierte Optikfläche 17 abweichend gestaltet sein. Auf die Lichtfalle 16 beziehungsweise die innere facettierte Optikfläche 17 kann gegebenenfalls verzichtet werden.

Gleiche Bauteile und Bauteilfunktionen sind durch gleiche Bezugszeichen gekennzeichnet.

### Bezugszeichenliste

- 1: Gehäusekörper
- 2: Schaltungsträger
- 3: Leuchtdiode
- 4: Hauptabstrahlrichtung
- 5: Optikkörper
- 6: Längsrichtung
- 7: Zwischenraum
- 8: Außenseite
- 9: Innenseite
- 10: Linsenoptik
- 11: Optisches Zentrum
- 12: Prisma
- 13: Prisma
- 14: Prisma
- 15: Prisma
- 16: Lichtfalle
- 17: facettierte Optikfläche
- 18: Radialrichtung
- 19: Innenfläche
- 20: Außenfläche
- 21: Umfangsrichtung
- 22: Facette
- 23: Anstellwinkel
- 24: Übergangsbereich
- 25: Breite
- 26: Breite
- 27: Nullrichtung

## Patentansprüche

1. Optikkörper (5) mit wenigstens einer Linsenoptik (10) umfassend eine Mehrzahl von konzentrisch zu einem optischen Zentrum (11) der Linsenoptik (10) vorgesehenen ringförmigen Prismen (12, 13, 14, 15), wobei an den Prismen (12, 13, 14, 15) jeweils eine dem optischen Zentrum (11) der Linsenoptik (10) zugewandte ringförmige Innenfläche (19) als Lichteintrittsfläche und eine rückwärtige, von dem optischen Zentrum (11) der Linsenoptik (10) abgewandte Außenfläche (20) vorgesehen ist, wobei die Außenfläche (20) nach Art einer Totalreflexionsfläche ausgebildet ist zum Umlenken des über die Lichteintrittsfläche eingekoppelten Lichts in Richtung einer Lichtaustrittsfläche (Außenseite 8) der Linsenoptik (10), **dadurch gekennzeichnet, dass** die Außenflächen (20) der Prismen (12, 13, 14, 15) facettiert ausgebildet sind derart, dass eine Mehrzahl von Facetten (22) in Umfangsrichtung (21) verteilt vorgesehen ist, wobei die Facetten (22) unter einem spitzen Anstellwinkel (23) zu der Umfangsrichtung (21) der Prismen (12, 13, 14, 15) vorgesehen sind.

2. Optikkörper (5) nach Anspruch 1, **dadurch gekennzeichnet, dass** die Außenfläche (20) asymmetrisch facettiert ausgebildet ist, wobei zwischen zwei benachbarten Facetten (22) ein gestufter Übergangsbereich (24) vorgesehen ist und wobei eine in die Umfangsrichtung (21) bestimmte Breite (26) des Übergangsbereichs (24) geringer ist als eine Breite (25) der Facetten (22).

3. Optikkörper (5) nach Anspruch 1 oder 2, **dadurch gekennzeichnet, dass** die Facetten (22) an benachbarten ringförmigen Prismen (12, 13, 14, 15) gegenläufig vorgesehen sind derart, dass die Anstellwinkel (23) der Facetten (22) an den benachbarten Prismen (12, 13, 14, 15) gespiegelt in Bezug zu einer Radialrichtung (18) der Linsenoptik (10) ausgebildet ist und/oder betragsmäßig gleich sind.

4. Optikkörper (5) nach einem der Ansprüche 1 bis 3, **dadurch gekennzeichnet, dass** die Facetten (22) und/oder die Übergangsbereiche (24) eines einzigen ringförmigen Prismas (12,13,14,15) und/oder die Facetten (22) und/oder die Übergangsbereiche (24) benachbarter ringförmiger Prismen (12,13,14, 15) eine gleiche Breite (25, 26) aufweisen.

5. Optikkörper (5) nach einem der Ansprüche 1 bis 4, **dadurch gekennzeichnet, dass** ein Winkelbereich der Facetten (22) inklusive eines zugeordneten Übergangsbereichs (24) 12° oder 15° oder 18°oder 20° oder 24° oder 30° oder 36° oder 40° oder 45° oder 60° gebildet ist.

6. Optikkörper (5) nach einem der Ansprüche 1 bis 5, **dadurch gekennzeichnet, dass** die Facetten (22) benachbarter ringförmiger Prismen (12, 13, 14, 15) einander ohne Winkelversatz zugeordnet sind.

7. Optikkörper (5) nach einem der Ansprüche 1 bis 6, **dadurch gekennzeichnet, dass** der Optikkörper (5) langgestreckt ausgebildet ist und dass eine Mehrzahl von Linsenoptiken (10) in einer Längsrichtung (6) des Optikkörpers (5) regelmäßig beabstandet vorgesehen ist.

8. Optikkörper (5) nach einem der Ansprüche 1 bis 7, **dadurch gekennzeichnet, dass** die Längsrichtung (6) des Optikkörpers (5) eine Nullrichtung (27) für die Lage der Linsenoptiken (10) definiert.

9. Optikkörper (5) nach einem der Ansprüche 1 bis 8, **dadurch gekennzeichnet, dass** die Lichtaustrittsfläche (Außenseite 8) eben und/oder optikfrei und/oder glatt ausgebildet ist.

10. Optikkörper (5) nach einem der Ansprüche 1 bis 9, **dadurch gekennzeichnet, dass** die mindestens eine Linsenoptik (10) nach Art einer Fresnellinse in die Radialrichtung (18) gestuft ausgebildet ist.

11. Optikkörper (5) nach einem der Ansprüche 1 bis 10, **dadurch gekennzeichnet, dass** im Inneren der konzentrischen ringförmigen Prismen (12,13,14, 15) eine weitere facettierte Optikfläche (17) vorgesehen ist.

12. Optikkörper (5) nach einem der Ansprüche 1 bis 11, **dadurch gekennzeichnet, dass** den ringförmigen Prismen (12, 13, 14, 15) in die Radialrichtung außen weitere Optikstrukturen (16) zugeordnet sind zum Umlenken von Streulicht in Richtung der Lichtaustrittsfläche (Außenseite 8).

13. Lichtmodul umfassend einen Optikkörper (5) nach einem der Ansprüche 1 bis 12 mit wenigstens einer Linsenoptik (10), wobei der wenigstens eine Linsenoptik (10) in einem optischen Zentrum (11) derselben eine Leuchtdiode (3) als Lichtquelle zugeordnet ist.

14. Lichtmodul nach Anspruch 13, **dadurch gekennzeichnet, dass** die Lichtaustrittsfläche der mindestens einen Linsenoptik (10) einer Abschlussscheibe des Optikkörpers (5) zugeordnet ist, wobei die Abschlussscheibe auf einer der Leuchtdiode (3) zugewandten Innenseite (9) die wenigstens eine Linsenoptik (10) vorsieht und wobei die Abschlussscheibe auf einer der Leuchtdiode (3) abgewandten Außenseite (8) optikfrei ausgebildet ist.
